# FASCICULE DE BREVET EUROPEEN

(11) **EP 4 061 150 B1**
(45) Date de publication et mention de la délivrance du brevet: **30.09.2026**
(21) Numéro de dépôt: 20820493.3
(22) Date de dépôt: 19.11.2020
(51) Int. Cl.: A23L 11/00, A21D 2/36

(54) **AMIDON DE LEGUMINEUSE FAIBLEMENT DIGESTIBLE**
NIEDRIG VERDAULICHE LEGUMINOSENSTÄRKE
LOW-DIGESTIBLE LEGUME STARCH

(30) Priorité: 22.11.2019 FR 1913094; 14.02.2020 US 202062976531 P
(43) Date de publication de la demande: 28.09.2022
(73) Titulaire: ROQUETTE FRERES, 62136 Lestrem (FR)
(72) Inventeur: PARCQ, Julien, 59000 LILLE (FR); DUPONT, Alban, 62350 CALONNE SUR LA LYS (FR); ALBERT, Marie, 59700 MARCQ EN BAROEUL (FR); DESAILLY, Fabrice, 62210 AVION (FR)
(74) Mandataire: Plasseraud IP
(86) Numéro de dépôt international: PCT/FR2020/052135
(87) Numéro de publication internationale: WO 2021/099748

(56) Documents cités:
- EP-A1- 1 130 392
- CN-B- 106 174 444
- ANONYMOUS: "Amidon de pois N-735", 13 April 2018 (2018-04-13), XP055695207, Retrieved from the Internet <URL:https://www.roquette.com/-/media/roquette-sharepoint-libraries/sdol_safety-data-sheet-publics-10000/roquette-sds_fr-amidon-de-pois-n-735-000000200431-fr.pdf> [retrieved on 20200514]
- CHUNG H J ET AL: "Impact of annealing and heat-moisture treatment on rapidly digestible, slowly digestible and resistant starch levels in native and gelatinized corn, pea and lentil starches", CARBOHYDRATE POLYMERS, APPLIED SCIENCE PUBLISHERS, LTD. BARKING, GB, vol. 75, no. 3, 11 February 2009 (2009-02-11), pages 436 - 447, XP025782302, ISSN: 0144-8617, [retrieved on 20080814], DOI: 10.1016/J.CARBPOL.2008.08.006
- RATNAYAKE W S ET AL: "Pea starch: Composition, Structure and Properties - A Review", STARCH: INTERNATIONAL JOURNAL FOR THE INVESTIGATION, PROCESSING AND USE OF CARBOHYDRATES AND THEIR DERIVATIVES, WILEY-VCH VERLAG, WEINHEIM, DE, vol. 54, 1 January 2002 (2002-01-01), pages 217 - 234, XP002269066, ISSN: 0038-9056, DOI: 10.1002/1521-379X(200206)54:6<217::AID-STAR217>3.0.CO;2-R
- ENGLYST KLAUS ET AL: "Inter-laboratory validation of the starch digestibility method for determination of rapidly digestible and slowly digestible starch", FOOD CHEMISTRY, ELSEVIER LTD, NL, vol. 245, 11 November 2017 (2017-11-11), pages 1183 - 1189, XP085314135, ISSN: 0308-8146, DOI: 10.1016/J.FOODCHEM.2017.11.037

## Description

La présente invention est relative à des lots d'amidon de légumineuses, notamment du pois, présentant une teneur en fraction lentement digestible (SDS) comprise entre 30 et 34 % en poids, caractérisés en outre par une teneur en fraction très lentement digestible (vSDS), comprise entre 34 et 40 % en poids.

La présente invention est également relative à l'utilisation de cette teneur contrôlée en fraction lentement (SDS) et très lentement (vSDS) digestibles en vue de sélectionner des lots d'amidons de pois présentant une teneur totale en amidon lentement et très lentement digestibles, supérieure à 64 % en poids et assurer une homogénéité maîtrisée du produit.

L'invention est définie par les revendications 1-5 annexées.

Tous les autres aspects, configurations ou modes de réalisation décrits dans le présent document qui ne relèvent pas du champ d'application des revendications sont fournis à titre purement informatif et ne font pas partie de l'invention.

### Contexte de l'invention

D'un point de vue physiologique, chez l'homme ou les animaux, l'essentiel des glucides ingérés lors de l'alimentation est représenté par l'amidon, molécule de réserve énergétique caractéristique des végétaux et composante principale des féculents (pâtes, farine, pommes de terre).

Lors de la digestion, les molécules d'amidon se dissocient en chaînes de glucanes linéaires, elles-mêmes ensuite dissociées en glucoses simples, assimilables par le système digestif.

La digestion de l'amidon débute dans la bouche pendant la mastication grâce à une enzyme de la salive : l'amylase salivaire.

Cette première décomposition de l'amidon est stoppée par l'acidité de l'estomac mais reprend dans le duodénum (première partie de l'intestin grêle) grâce à l'action des amylases pancréatique et intestinale.

L'action successive de toutes ces amylases conduit à l'apparition d'un diholoside, le maltose, qui sera lui-même transformé en deux sucres simples, des glucoses.

Synthétisé par voie biochimique, source d'hydrates de carbone, l'amidon est l'une des matières organiques les plus répandues du monde végétal, où il constitue la réserve nutritionnelle des organismes.

Il est ainsi naturellement présent dans les organes et tissus de réserve des végétaux supérieurs, en particulier dans les graines de céréales (blé, maïs...), les graines de légumineuses (pois, fèves ...), les tubercules de pomme de terre ou de manioc, les racines, les bulbes, les tiges et les fruits.

L'amidon est un mélange de deux homopolymères, l'amylose et l'amylopectine, composés d'unités de D-glucose, liées entre elles par des liaisons α (1-4) et des liaisons α (1-6) qui sont à l'origine de ramifications dans la structure de la molécule.

Ces deux homopolymères diffèrent par leur degré de branchement et leur degré de polymérisation.

L'amylose est légèrement ramifiée avec de courtes branches et présente une masse moléculaire comprise entre 10.000 et 1.000.000 Dalton. La molécule est formée de 600 à 1.000 molécules de glucose.

L'amylopectine est une molécule ramifiée avec de longues branches toutes les 24 à 30 unités de glucose, par l'intermédiaire de liaisons α (1-6). Sa masse moléculaire va de 1.000.000 à 100.000.000 Dalton et son niveau de branchement est de l'ordre de 5 %. La chaîne totale peut compter 10.000 à 100.000 unités glucose.

Le ratio entre l'amylose et l'amylopectine dépend de la source botanique de l'amidon.

L'amidon est stocké dans les organes et tissus de réserve dans un état granulaire, c'est-à-dire sous la forme de granules semi-cristallins.

Cet état semi-cristallin est essentiellement dû aux macromolécules d'amylopectine.

A l'état natif, les grains d'amidon présentent un taux de cristallinité allant de de 15 à 45% en poids qui dépend essentiellement de l'origine botanique et du procédé mis en œuvre pour leur extraction.

L'amidon granulaire, placé sous lumière polarisée, présente alors en microscopie une croix noire caractéristique, dite « croix de Malte ».

Ce phénomène de biréfringence positive est dû à l'organisation semi-cristalline des granules : l'orientation moyenne des chaînes de polymères étant radiale.

Pour une description plus détaillée de l'amidon granulaire, on pourra se référer au chapitre II intitulé « Structure et morphologie du grain d'amidon » de S. Perez, dans l'ouvrage « Initiation à la chimie et à la physico-chimie macromoléculaires », Première Edition, 2000, Volume 13, pages 41 à 86, Groupe Français d'Etudes et d'Applications des Polymères.

L'amidon sec renferme une teneur en eau qui varie de 12 à 20 % en poids selon l'origine botanique. Cette teneur en eau dépend évidemment de l'humidité résiduelle du milieu (pour une aw = 1, l'amidon peut fixer jusqu'à 0,5 g d'eau par gramme d'amidon).

Le chauffage, en excès d'eau, d'une suspension d'amidon à des températures supérieures à 50°C entraîne un gonflement irréversible des grains et conduit à leur dispersion, puis à leur solubilisation.

Ce sont notamment ces propriétés qui confèrent à l'amidon ses propriétés technologiques d'intérêt.

Pour une plage de température donnée appelée « plage de gélatinisation », le grain d'amidon va gonfler très rapidement et perdre sa structure semi-cristalline (perte de la biréfringence).

Tous les grains seront gonflés au maximum sur un intervalle de température de l'ordre de 5 à 10°C. On obtient un empois composé de grains gonflés qui constituent la phase dispersée et de molécules (amylose principalement) qui épaississent la phase continue aqueuse.

Les propriétés rhéologiques de l'empois dépendent de la proportion relative de ces deux phases et du volume de gonflement des grains. La plage de gélatinisation est variable selon l'origine botanique de l'amidon.

La viscosité maximale est obtenue quand l'empois d'amidon renferme un grand nombre de grains très gonflés. Quand on continue de chauffer, les grains vont éclater et le matériel va se disperser dans le milieu cependant la solubilisation n'interviendra que pour des températures supérieures à 100°C.

Les complexes amylose-lipide présentent des retards au gonflement car l'association empêche l'interaction de l'amylose avec les molécules d'eau et il faut des températures supérieures à 90°C pour obtenir le gonflement total des grains (cas de l'amylomaïs complexé aux lipides).

La disparition des grains et la solubilisation des macromolécules entraînent une diminution de la viscosité.

L'abaissement de température (par refroidissement) de l'empois d'amidon provoque une insolubilisation des macromolécules et une séparation des phases due à l'incompatibilité entre amylose et amylopectine puis on assiste à une cristallisation de ces macromolécules.

Ce phénomène est connu sous l'appellation de rétrogradation.

Quand un empois renferme de l'amylose, c'est cette première molécule qui subira la rétrogradation.

Elle consistera à la formation de double hélice et à l'association de ces dernières pour former des « cristaux » (type B) qui donneront par l'intermédiaire de zones de jonction un réseau tridimensionnel.

Ce réseau est formé très rapidement, en quelques heures. Au cours de l'élaboration de ce réseau, l'association des doubles hélices entre-elles par l'intermédiaire de liaisons pont hydrogène, déplace les molécules d'eau associées aux hélices et provoque une synérèse importante.

La complexité structurale de l'amidon et ses propriétés physico-chimiques font que cette classe d'hydrates de carbone sera assimilée puis digérée de façon variable chez l'homme et les animaux.

C'est la raison pour laquelle l'amidon peut être classé en trois catégories, en fonction de sa digestibilité : rapidement digestible, lentement digestible, ou non digestible.

L'amidon qui se présente sous forme naturellement granulaire / semi cristalline, peut être converti en « amidon rapidement digestible » (acronyme anglosaxon « RDS » pour Rapid Digestible Starch) après exposition à la chaleur, la pression et/ou à l'humidité durant les processus alimentaires.

L'amidon lentement digestible (acronyme anglosaxon « SDS » pour Slow Digestible Starch) prend plus longtemps à être dégradé par les enzymes digestives en comparaison avec les RDS parce qu'il présente une structure encore cristalline et qu'il est moins accessible aux enzymes de digestion.

La digestion de cette fraction SDS conduit à une libération modérée et régulière de glucose dans le sang. On parle alors d'amidons présentant un faible indice glycémique (acronyme anglosaxon « low G.I. » pour low Glycemic Index ou faible indice glycémique).

Des aliments qui présentent un contenu élevé en SDS provoqueront alors des réponses glycémiques post-prandiales plus faibles et des réponses insulinémiques plus basses que des aliments ne contenant qu'un faible contenu en SDS.

Inversement, les RDS sont des hydrates de carbones nutritifs, car ils libèrent leur glucose dans le sang beaucoup plus rapidement.

Quant aux amidons dits résistants (acronyme anglosaxon « RS » pour Resistant Starch), ils sont, quant à eux, assimilables à des fibres non-digestibles (tels que le son de maïs, les fibres d'avoine, les gommes) par les enzymes intestinales.

Il est admis, dans l'état de l'art, que l'amidon total est la somme de ses trois composantes RDS, SDS et RS.

Ces différentes fractions composant l'amidon sont donc digérées à des rythmes différents dans le système digestif humain.

On admet donc que les SDS ont une vitesse de digestion plus lente que les RDS. Les RS sont une fraction de l'amidon qui résiste à la digestion enzymatique dans l'intestin grêle. Ces derniers seront fermentés dans le gros intestin et peuvent dès lors être considérés comme des fibres alimentaires.

Les fractions SDS et RDS sont donc les sources de glucose disponible.

Les SDS sont naturellement présents dans certaines graines non cuites, des céréales comme le blé, le riz, l'orge, le seigle, le maïs, dans les légumineuses comme le pois, les féveroles et les lentilles.

Le contenu en SDS est principalement influencé par la gélatinisation de l'amidon lors du procédé alimentaire.

En effet, lors de ce processus, l'exposition à la température, la pression et l'humidité conduit à la conversion de la fraction SDS en RDS, rendant l'amidon plus accessible à la digestion enzymatique.

Cette conversion peut être minimisée par le contrôle des conditions de cuisson pour limiter la gélatinisation de l'amidon.

De ce fait, le contenu originel en SDS dans la composition ou le produit alimentaire dépendra de la manière dont sa préparation aura été menée.

Il est ainsi connu que les produits alimentaires qui contiennent beaucoup de SDS sont certaines pâtes alimentaires, le riz étuvé, l'orge perlé et certains biscuits, contrairement aux céréales soufflées du petit déjeuner ou au pain qui n'en contiennent habituellement que très peu.

Le contenu en SDS des aliments est classiquement déterminé en utilisant une méthode *in vitro* développée par H.N. ENGLYST et ses collaborateurs (publiée en 1992 dans l'European Journal of Clinical Nutrition, volume 46, pp S33 -S50).

Dans la suite de cet exposé, il sera fait référence à cette méthode de 1992 « selon ENGLYST ».

Cette méthode a été élaborée pour simuler la digestion enzymatique qui se produit dans l'intestin grêle.

Un échantillon de produit ou d'amidon est introduit dans un tube, en présence d'enzymes digestives, et la libération de glucose est mesurée durant 120 minutes de réaction.

Cette méthode permet de différencier :
- La fraction RDS, par la mesure du glucose rapidement libéré (acronyme anglosaxon « RAG »), en l'occurrence, la mesure du glucose libéré entre 0 et 20 minutes ;
- La fraction SDS, par la mesure du glucose lentement libéré (acronyme anglosaxon « SAG ») ; en l'occurrence, la mesure du glucose libéré entre 20 et 120 minutes ;
- La fraction RS, correspond au glucose non libéré après 120 minutes, qui se calcule, selon la méthode ENGLYST, par la formule suivante : TS - (RDS + SDS) où TS = amidon total (Total Starch considéré égal à 100 % en poids lorsque les analyses sont réalisées sur l'amidon en tant que tel).

Des aliments riches en glucides contenant plus de 50 % en poids de carbohydrates disponibles provenant d'amidon, dont au moins 40 % en poids sont du SDS, sont classiquement considérés comme des aliments à haute richesse en SDS.

Ils sont donc préconisés pour limiter l'indice glycémique et la production d'insuline, en regard des aliments plus pauvres en SDS.

De tous les amidons classiquement mis en œuvre dans ces applications alimentaires, les amidons de légumineuses et plus particulièrement l'amidon de pois, est un candidat de choix.

En effet, les graines de pois sont connues pour leur richesse en amidon (entre 55 et 70 % en poids de matière sèche) et pour leur faible indice glycémique (Ratnayake et al., 2002, Pea starch, composition, structure and properties - A review, in Starch/Stärke, 54, 217-234).

Les amidons de pois natifs, présentant une teneur en SDS classiquement comprises entre 27 et 38 % en poids selon ENGLYST, sont donc d'intérêt pour des applications nutritionnelles.

Cependant, des variabilités entre les lots d'amidons de pois ne permettent pas toujours de satisfaire les besoins exprimés. Cette variabilité repose sur deux critères majeurs : la saisonnalité (qualité variable intersaison des amidons de pois produits) et les diverses méthodes d'extraction mises en œuvre (impact des traitements hydro-thermiques mis en œuvre lors des process).

Pour garantir la qualité des lots d'amidon de pois, la société Demanderesse a trouvé qu'il était possible d'obtenir ce résultat en déterminant et définissant des teneurs particulières en SDS et en une fraction non caractérisée jusqu'alors par la méthode ENGLYST, fraction dite « très lentement digestible » ou vSDS pour « very Slow Digestible Starch ».

### Description détaillée

Ainsi, l'invention concerne des lots d'amidon de légumineuses, notamment de pois, présentant une teneur en fraction lentement digestible (SDS) comprise entre 30 et 34 % en poids, caractérisés en outre en ce qu'ils présentent une teneur en fraction très lentement digestible (vSDS), comprise entre 34 et 40 % en poids, dans laquelle la fraction vSDS est déterminée par la mesure de la libération en glucose en prolongeant la digestion ENGLYST jusqu'à son terme, défini par le plateau atteint au temps 420 minutes, dans laquelle :
- la digestion ENGLYST est la méthode de digestion in vitro définie dans H. N. Englyst et al in « Classification and measurement of nutritionally important starch fractions », Eur. J. Clin. Nutr. , 46 (Supp. 2), S33-S50 (1992) et
- la fraction vSDS est déterminée selon l'équation vSDS = 100 - (RDS + SDS + RS corrigée), où RDS est la fraction digestible entre 0 et 20 minutes, SDS est la fraction digestible entre 20 et 120 minutes et RS corrigée est la fraction non digestible après 420 minutes.

La présente invention est également relative à l'utilisation de cette teneur contrôlée en fraction lentement (SDS) et très lentement (vSDS) digestibles en vue de sélectionner des lots d'amidons de pois présentant une teneur totale en amidon lentement et très lentement digestibles, supérieure à 64 % en poids et assurer une homogénéité maîtrisée du produit.

Par « légumineuse » au sens de la présente invention, on entend toute plante appartenant aux familles des césalpiniacées, des mimosacées ou des papilionacées et notamment toute plante appartenant à la famille des papilionacées comme, par exemple, le pois, le haricot, la fève, la fèverole, la lentille, la luzerne, le trèfle ou le lupin. L'article de R. HOOVER et al. intitulé « Composition, structure, functionality and chemical modification of legume starches : a review », publié dans Can. J. Physiol. Pharmacol. 1991,69 pp. 79-92) décrit notamment dans ses tableaux différentes légumineuses.

De préférence, la légumineuse est choisie dans le groupe comprenant le pois, le haricot, la fève et la fèverole.

Avantageusement, il s'agit de pois, le terme « pois » étant ici considéré dans son acception la plus large et incluant en particulier :
- toutes les variétés sauvages de « pois lisse » (anglais : « smooth pea »), et
- toutes les variétés mutantes de « pois lisse » et de « pois ridé » (anglais : « wrinkled pea ») et ce, quelles que soient les utilisations auxquelles on destine généralement lesdites variétés (alimentation humaine, nutrition animale et/ou autres utilisations).
Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

Selon une autre variante avantageuse, les légumineuses (par exemple des variétés de pois ou de féverole) sont des plantes donnant des graines contenant au moins 25 %, de préférence au moins 40 %, en poids d'amidon (sec/sec).

Par « amidon de légumineuse », on entend toute composition extraite et ce, de quelque manière que ce soit, d'une légumineuse et notamment d'une papilionacée, et dont la teneur en amidon est supérieure à 40 %, de préférence supérieure à 50 % et encore plus préférentiellement supérieure à 75 %, ces pourcentages étant exprimés en poids sec par rapport aux poids sec de ladite composition.

Avantageusement, cette teneur en amidon est supérieure à 90 % en poids (sec/sec). Elle peut en particulier être supérieure à 95 % en poids, y compris supérieure à 98 % poids.

Par amidon « natif », on entend un amidon qui n'a subi aucune modification chimique.

Afin de déterminer leur teneur de base en fraction SDS, les amidons de pois selon l'invention ou non sont analysés suivant les conditions opératoires de digestion *in vitro* de la méthode de H. N. Englyst et al in « Classification and measurement of nutritionally important starch fractions », Eur. J. Clin. Nutr. , 46 (Supp. 2), S33-S50 (1992).

La méthode consiste à mesurer les fractions d'amidon rapidement digestible (RDS), lentement digestible (SDS) et non digestible (résistants) (RS) contenues dans un aliment.

Ces fractions sont déterminées après digestion enzymatique avec de la pancréatine, de l'amyloglucosidase et de l'invertase.

Le glucose libéré est mesuré par colorimétrie, en utilisant un kit de glucose oxydase Glucose GOD FS référencé 1 2500 99 10 923, commercialisé par la société DiaSys Distribution France Sarl en suivant le protocole dudit kit.

Le détail de la méthode mise en œuvre pour la mesure de la digestion selon ENGLYST est le suivant.

### Les réactifs utilisés :

- Acétate de sodium anhydre (réf : 71184, de la société SIGMA)
- Acide benzoïque (réf : 242381, de la société SIGMA)
- CaCl2 (réf : 1.02378.0500, de la société MERCK)
- Acide acétique 0,1M (réf : 33209, de la société SIGMA)
- Pancréatine de porc 8 x USP (réf : P 7545 de la société SIGMA)
- Amyloglucosidase EC 3.2.1.3 (de la société SIGMA, d'activité ≥260 U/ml / ≈ 300 AGU/ml, Cat. NO. A7095)
- Invertase EC 3.2.1.26 (de la société SIMA , d'activité ≥300 units/mg solid, Cat. NO. I-4504)
- Guar (réf : G4129, de la société SIGMA)
- Ethanol à 66°

### Mode opératoire

### Préparation de la solution d'acide benzoïque saturée

Peser 4 g d'acide benzoïque dans 1I d'eau osmosée puis mélanger. La solution peut être conservée à température ambiante pendant 1 mois.

### Préparation solution de CaCl2 1M/L.

Peser 1,1098 g de CaCl2 dans 10 ml d'eau osmosée puis mélanger. La solution peut être conservée à température ambiante pendant 1 mois.

### Préparation tampon acétate à 0,1M - pH 5,2.

Peser 8,203 g d'acétate de sodium anhydre dans 250 ml de solution d'acide benzoïque saturée,
- Ajouter 500 ml d'eau osmosée puis mélanger,
- Ajuster le pH à 5.2 +/- 0.5 avec de l'acide acétique à 0.1 M,
- Compléter avec de l'eau osmosée à 1000 ml dans une fiole jaugée,
- Ajouter 4 ml de la solution de CaCl2 à 1 M pour 1 L de tampon préparé,
- Mélanger et vérifier le pH.
La solution peut être conservée à 4°C pendant 1 mois.

### Préparation de la solution de gomme de Guar dans la solution tampon d'acétate

- Peser précisément 750 mg de gomme de Guar dans 300 ml de tampon acétate
- Mettre sous agitation en continu

### PREPARATION DES ECHANTILLONS A ANALYSER ET DES ENZYMES MISES EN ŒUVRE

### Préparation des échantillons

- Peser précisément 0,8 g d'amidon sec à tester,
- Ajouter 20 ml de solution tampon d'acétate 0,1M - pH 5,2 + gomme de Guar,
- Placer les flacons au bain marie pendant 15 minutes sous agitation à 37°C,
- Prélever 0,1 ml de la solution obtenue à T=0 minute puis ajouter 0,9 ml d'éthanol à 66° (soit une dilution au 1/10^{ème}),
- Dosage du glucose (en %) par colorimétrie au temps T=0 min.
Un blanc et un standard (Peser 0,5 g de dextrose anhydre) sont réalisés dans les mêmes conditions que la préparation des échantillons.

### Préparation du cocktail enzymatique

Le cocktail enzymatique est prévu pour tester 12 échantillons. Il doit être préparé le jour même selon les protocoles suivants.

### Préparation de la pancréatine de porc 8 x USP.

Préparer 4 solutions de pancréatine afin d'obtenir 54 ml de surnageant.

Pour cela :
- Peser 2,5 g de pancréatine de porc 8 x USP,
- Ajouter 20 ml d'eau osmosée puis mélanger pendant 10 minutes,
- Centrifuger la solution à 1500G pendant 10 minutes,
- Récupérer 13,5 ml de surnageant.

### Préparation de l'amyloglucosidase

- Diluer 3,7 ml d'une solution d'amyloglucosidase EC 3.2.1.3 avec 4,3 ml d'eau osmosée puis mélanger pendant 10 minutes,
- Prélever 6ml de la nouvelle solution puis l'ajouter avec les 54 ml de surnageant pancréatique puis mélanger.

### Préparation de l'invertase

Peser 50 mg d'invertase EC 3.2.1.26,
Ajouter 6 ml d'eau osmosée puis mélanger pendant 10 minutes,
Prélever 4ml de la solution puis l'ajouter avec les 54 ml de surnageant pancréatique puis mélanger

### PROTOCOLE DE DIGESTION

- Ajouter 5 ml de cocktail enzymatique dans les préparations des échantillons
- Incuber pendant 120 minutes à 37°C au bain thermostaté sous agitation,
- Prélever 0,1 ml de la solution obtenue à T=20 min et à T=120 min puis les ajouter à 0,9 ml d'éthanol à 66° (soit une dilution au 1/10^{ème}),
- Mélanger puis centrifuger les échantillons à 1500G pendant 3 minutes,
- Dosage du glucose (en %) par colorimétrie aux temps T=20min et T=120min

### Détermination du taux de glucose libre (fg) et du taux de glucose total (tg)

Le taux du glucose libre (FG) correspond à la mesure effectuée au temps 0min.

Le taux de glucose total (TG) est mesuré de la manière suivante :
- Prélever 0,25 ml de la solution obtenue à T=120 min dans un tube type « Eppendorf »,
   Ajouter 0.25 ml d'acide chlorhydrique 4N, mélanger,
- Placer le tube dans un bain-marie à sec à 100°C pendant 45 minutes, laisser refroidir à température ambiante,
- Neutraliser la solution hydrolysée avec 0.25 ml de soude 4N,
- Ajouter 0,25 ml d'eau osmosée, mélanger
- Réaliser une dilution au 1/10^{ème} dans de l'eau osmosée, (0,1 ml dans 0,9 ml). Soit une dilution finale au 1/40^{ème}.

### DETERMINATION DU RDS, SDS ET DU RS

Détermination du glucose libéré aux temps :
- T=0min (teneur en glucose initiale),
- T=20min (teneur en glucose libéré après 20 minutes)
- T=120min (teneur en glucose libéré après 120 minutes).

Selon la méthode ENGLYST : $Glucose \left(%\right) = \frac{At \times Vt \times C \times D}{As \times {Wt}_{¯}} \times 100$ Où
- At = Absorbance (échantillon) - Absorbance (blanc)
- Vt = Volume total (échantillon en ml)
- C = Concentration du standard (glucose en mg/ml)
- D = Facteur de dilution
- As = Absorbance (standard) - Absorbance (blanc)
- Wt = Poids sec (échantillon en mg)

La détermination des fractions RDS, SDS et du RS est réalisée comme suit :
- RDS = (G20 - FG) x 0,9
- SDS = (G120 - G20) x 0,9
- RS = TS - (RDS +SDS) où TS = (TG - FG) x 0,9

Selon cette méthode, l'amidon de pois natif présente classiquement une teneur en RDS comprise entre 13 et 16 % en poids, une teneur en SDS comprise entre 27 et 38 % en poids, et une teneur en RS comprise entre 45 et 56 % en poids, ces valeurs étant exprimées avec un écart type de 2 % en regard de la variabilité inter-expérimentale.

La société Demanderesse recommande de sélectionner tout d'abord les lots d'amidons de pois présentant une teneur en SDS comprise entre 30 et 34 % en poids, plus à même de répondre aux critères de digestibilité requis, puis d'en déterminer la teneur en fraction très lentement digestible (vSDS).

Après de nombreuses et longues investigations, la société Demanderesse a trouvé que contrairement à ce qui était établi selon ENGLYST, la fraction dite résistante à la digestion (RS) était digérée, pour peu que l'on n'arrête pas la cinétique de réaction à 120 minutes.

A sa connaissance, seuls CHUNG et al., 2009, in Carbohydrates Polymer, vol 75, pp 436 - 447, proposaient de classer les amidons de pois en se basant sur des conditions d'hydrolyse légèrement différentes d'ENGLYST, i.e. la fraction SDS étant celle digérée entre 20 et 180 minutes.

Cette modification a pour conséquence une augmentation de la teneur en amidons dits « lentement digestibles » mais calculée sur base d'une fraction SDS ne répondant plus à la formule initialement décrite par Englyst limitant la cinétique de réaction à 120 minutes.

La société Demanderesse a prolongé la cinétique de digestion ENGLYST jusqu'à 500 minutes, et a observé que les amidons de légumineuses, notamment de pois continuaient à être digérés au-delà du temps 120 minutes, pour atteindre un plateau de digestibilité maximale au temps 420 minutes.

La société Demanderesse a donc choisi de tirer profit de cette nouvelle fraction encore plus lentement digestible pour définir la composante « très lentement digestible » ou vSDS conforme à l'invention.

Par ailleurs, et cela constitue une des clefs de cette conduite prolongée du test ENGLYST tel que communément admis dans l'état de l'art, ce taux de vSDS correspond à la digestion d'une sous-fraction de la teneur en RS de l'amidon légumineuse, notament de pois, tel qu'initialement définie par ENGLYST au-delà des 120 minutes. Les teneurs en RDS et SDS restent quant à elles inchangées.

De ce fait, contrairement à ce qui est connu dans l'état de l'art, notamment par CHUNG et al. précité, il ne s'agit pas dans la présente invention de changer les conditions opératoires du test ENGLYST pour augmenter artificiellement le taux de SDS, mais de se placer dans des conditions opératoires permettant de déterminer la réelle capacité de libération de glucose des amidons légumineuse, notamment de pois considérés, en prolongeant la digestion ENGLYST jusqu'à son terme, défini ici par le plateau atteint au temps 420 minutes.

L'invention porte donc également sur une méthode de détermination de la teneur en fraction vSDS d'un amidon de légumineuse, cette teneur étant déterminée par la mesure de la libération en glucose en prolongeant la digestion ENGLYST jusqu'à son terme, défini par le plateau atteint au temps 420 minutes, dans laquelle :
- la digestion ENGLYST est la méthode de digestion in vitro définie dans H. N. Englyst et al in « Classification and measurement of nutritionally important starch fractions », Eur. J. Clin. Nutr. , 46 (Supp. 2), S33-S50 (1992) et
- la fraction vSDS est déterminée selon l'équation vSDS = 100 - (RDS + SDS + RS corrigée), où RDS est la fraction digestible en 20 minutes, SDS est la fraction digestible en 120 minutes et RS corrigée est la fraction non digestible après 420 minutes.
Enfin, l'invention porte aussi sur l'utilisation de la mesure de la teneur en fraction très lentement digestible d'un amidon de légumineuse pour sélectionner des lots d' amidon selon l'invention.

La mesure de libération du glucose effectuée au temps 420 minutes autorise l'élaboration d'une nouvelle formule qui permet :
1) de corriger la valeur de la fraction RS (nommée alors « RS corrigée »), basée sur l'observation selon laquelle la digestibilité maximale est atteinte au plateau après 420 minutes de digestion.
   On en déduit alors que le RS corrigé (fraction non digestible après 420 minutes) est égal à 100 - (T420 x 0,9). Le facteur de correction 0,9 étant nécessaire pour le calcul des fractions selon la méthode ENGLSYT.
2) D'en déduire la teneur en vSDS par le simple calcul :$vSDS = 100 - \left(RDS+SDS+RS corrigée\right) .$

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### Exemples

Exemple 1 : 1 lot d'amidon de pois natif produit par la société Demanderesse sous le libellé commercial N735 (référencé lot WS88V) a été analysé selon ENGLYST (1992) jusqu'à 120 minutes, puis jusqu'à 420 minutes de temps réactionnel.

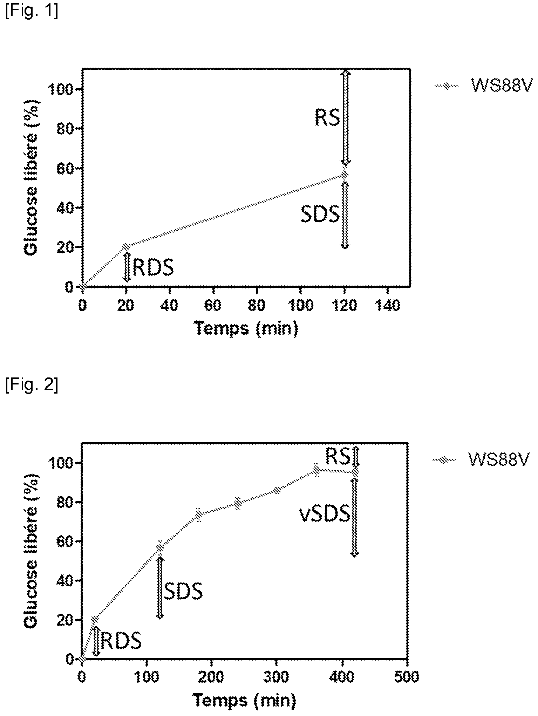

[Fig 1] La figure 1 montre la cinétique selon ENGLYST jusqu'à 120 minutes.
[Fig 2] La figure 2 reprend les données de la Figure 1 et prolonge la cinétique jusqu'à 420 minutes.

Le tableau 1 suivant donne les teneurs en pourcentages en poids en RDS, SDS et RS calculés selon la méthode ENGLYST classique.

**[Tableau 1]**

| | RDS (entre 0 et 20 minutes) | SDS (entre 20 et 120 minutes) | RS (par calcul) |
|---|---|---|---|
| WS88V | 18 | 33 | 49 |

En prolongeant la cinétique de digestion jusqu'à 420 minutes, et réalisant la mesure du glucose libéré après 420 minutes, on obtient par calcul les teneurs en pourcentages en poids de RS corrigée et de vSDS consignées dans le tableau 2 suivant.

**[Tableau 2]**

| | RDS (entre 0 et 20 minutes) | SDS (entre 20 et 120 minutes) | RS (corrigée) | vSDS (par calcul) |
|---|---|---|---|---|
| WS50V | 18 | 33 | 12 | 37 |

### Exemple 2 : Caractérisation poussée et sélection de profils de digestion de différents lots d'amidon de pois

Des cinétiques prolongées de digestion ont été réalisées sur 14 lots supplémentaires d'amidon de pois natifs extraits par la société Demanderesse, qui permettent non seulement de confirmer la variabilité inter-lots en matière de digestibilité, mais également de définir les lots les plus adaptés aux applications visées. Le tableau 3 suivant donne les teneurs en pourcentages en poids en RDS, SDS, RS et vSDS.

**[Tableau 3]**

| Lots damidos de poinatifs | **RDS = (GT20min -GTD) X 0,9** | **SDS = (GT120min-GT20min) X 0,9** | **RS corigée = 100 - (T420 X 0,9)** | **vSDS = 100 - (RDS + SDS + RS cor.)** |
|---|---|---|---|---|
| **WL81V** | 15,8 | 35,5 | 9,4 | 39,2 |
| **WS66V** | 15,5 | 33,3 | 12,6 | 38,6 |
| **WPO1V** | 13,8 | 33,5 | 14,4 | 38,3 |
| **WU62V** | 16,5 | 29,8 | 19,0 | 34,7 |
| **W9034** | 15,7 | 30,3 | 20,5 | 33,5 |
| **WW25V** | 17,5 | 29,9 | 18,2 | 34,3 |
| **W9061** | 14,5 | 32,6 | 20,2 | 32,6 |
| **W9125** | 17,1 | 30,7 | 12,8 | 39,4 |
| **W9159** | 15,1 | 30,9 | 18,9 | 35,1 |
| **W9167** | 17,9 | 34,4 | 19,8 | **27,9** |
| **WX24V** | 18,4 | **27,6** | 18,3 | 35,7 |
| **W9237** | 17,1 | 29,4 | 13,7 | 39,8 |
| **W9258** | 17,4 | 31,4 | 13,7 | 37,5 |
| **WX72V** | 17,4 | 31,4 | 13,7 | 37,5 |

Il s'en déduit que si l'on définit nos amidons de pois de par une teneur en SDS comprise entre 30 et 34 % en poids et une teneur en vSDS comprise entre 34 et 40 % en poids (écart type 2%), on se doit d'exclure les lots WX24V (SDS trop faible) et W9167 (teneur en SDS acceptable, mais teneur en vSDS trop faible). De par cette méthode de sélection, on s'assure de proposer uniquement des lots d'amidons de pois bénéficiant d'une homogénéité maîtrisée et une teneur totale en amidon lentement et très lentement digestible supérieur à 64% en poids.

## Revendications

1. Lots d'amidon de légumineuse présentant une teneur en fraction lentement digestible (SDS) comprise entre 30 et 34 % en poids, caractérisés en qu'ils présentent également une teneur en fraction très lentement digestible (vSDS), comprise entre 34 et 40 % en poids, dans laquelle la fraction vSDS est déterminée par la mesure de la libération en glucose en prolongeant la digestion ENGLYST jusqu'à son terme, défini par le plateau atteint au temps 420 minutes, dans laquelle :
- la digestion ENGLYST est la méthode de digestion *in vitro* définie dans H. N. Englyst et al in *« Classification and measurement of nutritionally important starch fractions »,* Eur. J. Clin. Nutr. , 46 (Supp. 2), S33-S50 (1992)
et
- la fraction vSDS est déterminée selon l'équation vSDS = 100 - (RDS + SDS + RS corrigée), où RDS est la fraction digestible entre 0 et 20 minutes, SDS est la fraction digestible entre 20 et 120 minutes et RS corrigée est la fraction non digestible après 420 minutes.

2. Lots d'amidon de légumineuse selon la revendication 1, **caractérisés en ce que** l'amidon de légumineuse est choisi dans le groupe des amidons de pois, de haricot, de fève, de fèverole, de lentille, de luzerne, de trèfle et de lupin, et est particulièrement l'amidon de pois.

3. Lots d'amidon de légumineuse selon l'une ou l'autre des revendications 1 et 2, **caractérisés en ce qu'**ils présentent une teneur totale en amidon lentement et très lentement digestible supérieur à 64% en poids.

4. Méthode de détermination de la teneur en fraction vSDS d'un amidon de légumineuse, cette teneur étant déterminée par la mesure de la libération en glucose en prolongeant la digestion ENGLYST jusqu'à son terme, défini par le plateau atteint au temps 420 minutes, dans laquelle :
- la digestion ENGLYST est la méthode de digestion *in vitro* définie dans H. N. Englyst et al in *« Classification and measurement of nutritionally important starch fractions »,* Eur. J. Clin. Nutr. , 46 (Supp. 2), S33-S50 (1992)
et
- la fraction vSDS est déterminée selon l'équation vSDS = 100 - (RDS + SDS + RS corrigée), où RDS est la fraction digestible en 20 minutes, SDS est la fraction digestible en 120 minutes et RS corrigée est la fraction non digestible après 420 minutes.

5. Utilisation de la méthode de détermination de la teneur en fraction très lentement digestible d'un amidon de légumineuse selon la revendication 4 pour sélectionner des lots d'amidon selon l'une quelconque des revendications 1 à 3.

## Patentansprüche

1. Chargen von Hülsenfruchtstärke, welche einen Gehalt an langsam verdaulicher Fraktion (SDS) aufweisen, welcher zwischen 30 und 34 Gew.-% liegt, **dadurch gekennzeichnet, dass** sie ferner einen Gehalt an sehr langsam verdaulicher Fraktion (vSDS) aufweisen, welcher zwischen 34 und 40 Gew.-% liegt, wobei die vSDS-Fraktion durch die Messung der Glucosefreisetzung bei Verlängern der ENGLYST-Verdauung bis zu ihrem Ende bestimmt wird, welches durch das zum Zeitpunkt 420 Minuten erreichte Plateau definiert ist, wobei:
- die ENGLYST-Verdauung das *In-vitro*-Verdauungsverfahren ist, welches in H. N. Englyst et al. in "*Classification and measurement of nutritionally important starch fractions*", Eur. J. Clin. Nutr., 46 (Supp. 2), S33-S50 (1992) definiert ist, und
- die vSDS-Fraktion gemäß der Gleichung vSDS = 100 - (RDS + SDS + korrigiertes RS) bestimmt wird, wobei RDS die zwischen 0 und 20 Minuten verdauliche Fraktion ist, SDS die zwischen 20 und 120 Minuten verdauliche Fraktion ist und korrigiertes RS die nach 420 Minuten unverdauliche Fraktion ist.

2. Chargen von Hülsenfruchtstärke nach Anspruch 1, **dadurch gekennzeichnet, dass** die Hülsenfruchtstärke ausgewählt ist aus der Gruppe der Erbsen-, Bohnen-, Saubohnen-, Ackerbohnen-, Linsen-, Luzernen-, Klee- und Lupinenstärken, und insbesondere Erbsenstärke ist.

3. Chargen von Hülsenfruchtstärke nach einem der Ansprüche 1 und 2, **dadurch gekennzeichnet, dass** sie einen Gesamtgehalt an langsam und sehr langsam verdaulicher Stärke über 64 Gew.-% aufweisen.

4. Verfahren zur Bestimmung des Gehalts an vSDS-Fraktion einer Hülsenfruchtstärke, wobei dieser Gehalt durch die Messung der Glucosefreisetzung bei Verlängern der ENGLYST-Verdauung bis zu ihrem Ende bestimmt wird, welches durch das zum Zeitpunkt 420 Minuten erreichte Plateau definiert ist, wobei:
- die ENGLYST-Verdauung das *In-vitro*-Verdauungsverfahren ist, welches in H. N. Englyst et al. in "*Classification and measurement of nutritionally important starch fractions*", Eur. J. Clin. Nutr., 46 (Supp. 2), S33-S50 (1992) definiert ist, und
- die vSDS-Fraktion gemäß der Gleichung vSDS = 100 - (RDS + SDS + korrigiertes RS) bestimmt wird, wobei RDS die in 20 Minuten verdauliche Fraktion ist, SDS die in 120 Minuten verdauliche Fraktion ist und korrigiertes RS die nach 420 Minuten unverdauliche Fraktion ist.

5. Verwendung des Verfahrens zur Bestimmung des Gehalts an sehr langsam verdaulicher Fraktion einer Hülsenfruchtstärke nach Anspruch 4 zum Auswählen von Chargen von Stärke nach einem der Ansprüche 1 bis 3.

## Claims

1. Batches of pulse starch having a slowly digestible fraction content (SDS) of between 30 and 34% by weight, **characterised in that** they also have a very slowly digestible fraction content (vSDS) of between 34 and 40% by weight, wherein the vSDS fraction is determined by measuring the release of glucose by extending the ENGLYST digestion until its completion, defined by the plateau reached at the time of 420 minutes, wherein:
- the ENGLYST digestion is the *in vitro* digestion method defined by H. N. Englyst et al in *"Classification and measurement of nutritionally important starch fractions"*, Eur. J. Clin. Nutr. , 46 (Supp. 2), S33-S50 (1992)
and
- the vSDS fraction is determined using the equation vSDS = 100 - (RDS + SDS + corrected RS), where RDS is the fraction digestible between 0 and 20 minutes, SDS is the fraction digestible between 20 and 120 minutes and corrected RS is fraction that remains undigested after 420 minutes.

2. The batches of pulse starch according to claim 1, **characterised in that** the pulse starch is selected from the group consisting of pea, bean, broad bean, field bean, lentil, alfalfa, clover and lupin starches, and is, in particular, pea starch.

3. The batches of pulse starch according to any one of claims 1 and 2, **characterised in that** they have a total content of slowly and very slowly digestible starch that is greater than 64% by weight.

4. A method for determining the vSDS fraction content of a pulse starch, this content being determined by measuring the release of glucose by extending the ENGLYST digestion until its completion, defined by the plateau reached at the time of 420 minutes, wherein:
- the ENGLYST digestion is the *in vitro* digestion method defined by H. N. Englyst et al in *"Classification and measurement of nutritionally important starch fractions"*, Eur. J. Clin. Nutr. , 46 (Supp. 2), S33-S50 (1992)
and
- the vSDS fraction is determined using the equation vSDS = 100 - (RDS + SDS + corrected RS), where RDS is the fraction digestible in 20 minutes, SDS is the fraction digestible in 120 minutes and corrected RS is the fraction that remains undigested after 420 minutes.

5. A use of the method for determining the content of the very slowly digestible fraction of a pulse starch according to claim 4 to select batches of starch according to any one of claims 1 to 3.
